# EUROPÄISCHE PATENTANMELDUNG

(11) **EP 4 516 561 A1**
(43) Veröffentlichungstag der Anmeldung: **05.03.2025**
(21) Anmeldenummer: 23194802.7
(22) Anmeldetag: 01.09.2023
(51) Int. Cl.: B60L 3/00, B66C 23/50, E01B 29/00, B60L 9/00, B60L 1/00

(54) **VERFAHRBARE ELEKTRISCHE UMFORM-STATION**

(71) Anmelder: HYPERION Verwaltung GmbH, 21397 Vastorf (DE)
(72) Erfinder: FRENZEL, Jörg, 21397 Vasorf OT Rohstorf (DE); FENKER, Oliver, Dr. Ing., 88447 Warthausen (DE)
(74) Vertreter: Patentanwälte Bressel und Partner mbB

(57) **Zusammenfassung**

Die Erfindung betrifft eine verfahrbare elektrische Umform-Station zur Verwendung auf Bahnschienen, mit einem Rahmen, umfassend zumindest vier elektrisch leitende Räder, vorzugsweise Stahlräder, zum Fahren auf Bahnschienen und wenigstens einen Speiseanschluss sowie zumindest einen Verbraucheranschluss, wobei jeder Speiseanschluss zum Anschluss an ein Speisungsnetz ausgebildet ist und der durch den Speiseanschluss geleitete Strom über wenigstens ein elektrisch leitendes Rad zunächst an die Bahnschienen und von dort an die die Bahnschienen umgebende elektrische Erde weitergeleitet wird, wobei weiterhin jeder Verbraucheranschluss zur Verbindung mit wenigstens einem externen elektrischen Verbraucher und/oder zumindest einem externen Generatoren ausgebildet ist, und weiterhin wenigstens einen elektrischen Umformer, wobei jeder elektrische Umformer zur Umwandlung der am Speiseanschluss anliegenden Spannung für zumindest einen Verbraucheranschluss ausgebildet und mit zumindest einem Speiseanschluss und wenigstens einem Verbraucheranschluss mittel- oder unmittelbar jeweils verbunden ist.

Um eine ausreichende Sicherheit gegen eine Überhöhung der Schienenspannung zu schaffen, soll
- zumindest eine Messeinrichtung vorgesehen sein, die zur Erfassung der Schienenspannung der mit den elektrisch leitenden Rädern verbundenen Bahnschienen ausgebildet ist, und dass zumindest eine mit der Messeinrichtung verbundene Steuereinheit vorgesehen ist, wobei die Steuereinheit zur Auslösung einer den Stromfluss zwischen allen Speiseanschlüssen und allen elektrisch leitenden Rädern, durch welche Strom an die Bahnschienen geleitet wird, trennenden Sicherung ausgebildet ist, wenn die von der Messeinrichtung gemessene Schienenspannung der mit den elektrisch leitenden Rädern verbundenen Bahnschienen einen in der Steuereinheit abgespeicherten Grenzwert überschreitet
und/oder
- zumindest eine Messeinrichtung vorgesehen sein, die zur Erfassung von Spannungsunterschieden zwischen mit den elektrisch leitenden Rädern verbundenen Bahnschienen einerseits und der die Bahnschienen umgebende elektrischen Erde andererseits ausgebildet ist, und dass zumindest eine mit der Messeinrichtung verbundene Steuereinheit sowie eine Sicherung zur Trennung des Stromflusses zwischen allen Speiseanschlüssen und allen elektrisch leitenden Rädern, durch welche Strom an die Bahnschienen geleitet wird, vorgesehen sind, wobei die Steuereinheit zur Auslösung der Sicherung ausgebildet ist, wenn der von der Messeinrichtung gemessene Spannungsunterschied zwischen den mit den elektrisch leitenden Rädern verbundenen Bahnschienen einerseits und der die Bahnschienen umgebende elektrischen Erde andererseits einen in der Steuereinheit abgespeicherten unterschreitet, wobei der Grenzwert vorzugsweise 50 V beträgt.

## Beschreibung

Die Erfindung betrifft eine verfahrbare elektrische Umform-Station zur Verwendung auf Bahnschienen, mit einem Rahmen, umfassend zumindest vier elektrisch leitende Räder, vorzugswiese Stahlräder, zum Fahren auf Bahnschienen und wenigstens einen Speiseanschluss sowie zumindest einen Verbraucheranschluss, wobei jeder Speiseanschluss zum Anschluss an ein Speisungsnetz ausgebildet ist und der durch den Speiseanschluss geleitete Strom über wenigstens ein elektrisch leitendes Rad zunächst an die Bahnschienen und von dort an die die Bahnschienen umgebende elektrische Erde weitergeleitet wird, wobei weiterhin jeder Verbraucheranschluss zur Verbindung mit wenigstens einem externen elektrischen Verbraucher und/oder zumindest einem externen Generatoren ausgebildet ist, und weiterhin wenigstens einen elektrischen Umformer, wobei jeder elektrische Umformer zur Umwandlung der am Speiseanschluss anliegenden Spannung für zumindest einen Verbraucheranschluss ausgebildet und mit zumindest einem Speiseanschluss und wenigstens einem Verbraucheranschluss mittel- oder unmittelbar jeweils verbunden ist.

Aus der Praxis sind derartige Umform-Stationen in theoretischer Hinsicht bekannt. Nachteilig hierbei ist, dass der Betrieb einer solchen Umform-Station in der Praxis nicht erfolgt, weil keine ausreichende Sicherheit gegen eine Überhöhung der Schienenspannung gegeben ist.

Aufgabe der Erfindung ist es, die vorgenannten Nachteile zu vermeiden und eine betriebssichere Umform-Station anzugeben. Diese Aufgabe wird bei einer gattungsgemäßen Umform-Station dadurch gelöst, dass
- zumindest eine Messeinrichtung vorgesehen ist, die zur Erfassung der Schienenspannung der mit den elektrisch leitenden Rädern verbundenen Bahnschienen ausgebildet ist, und dass zumindest eine mit der Messeinrichtung verbundene Steuereinheit vorgesehen ist, wobei die Steuereinheit zur Auslösung einer den Stromfluss zwischen allen Speiseanschlüssen und allen elektrisch leitenden Rädern, durch welche Strom an die Bahnschienen geleitet wird, trennenden Sicherung ausgebildet ist, wenn die von der Messeinrichtung gemessene Schienenspannung der mit den elektrisch leitenden Rädern verbundenen Bahnschienen einen in der Steuereinheit abgespeicherten Grenzwert überschreitet
   und/oder
- zumindest eine Messeinrichtung vorgesehen ist, die zur Erfassung von Spannungsunterschieden zwischen mit den elektrisch leitenden Rädern verbundenen Bahnschienen einerseits und der die Bahnschienen umgebende elektrischen Erde andererseits ausgebildet ist, und dass zumindest eine mit der Messeinrichtung verbundene Steuereinheit sowie eine Sicherung zur Trennung des Stromflusses zwischen allen Speiseanschlüssen und allen elektrisch leitenden Rädern, durch welche Strom an die Bahnschienen geleitet wird, vorgesehen sind, wobei die Steuereinheit zur Auslösung der Sicherung ausgebildet ist, wenn der von der Messeinrichtung gemessene Spannungsunterschied zwischen den mit den elektrisch leitenden Rädern verbundenen Bahnschienen einerseits und der die Bahnschienen umgebende elektrischen Erde andererseits einen in der Steuereinheit abgespeicherten unterschreitet, wobei der Grenzwert vorzugsweise 50 V beträgt.

Somit wird die Sicherung aktiviert und damit der Stromfluss zwischen allen Speiseanschlüssen und allen elektrisch leitenden Rädern, durch welche Strom an die Bahnschienen geleitet wird, automatisch getrennt, wenn die Schienenspannung über einen festgelegten Grenzwert ansteigt und/oder der Spannungsunterschied zwischen den mit den elektrisch leitenden Rädern verbundenen Bahnschienen und der die Bahnschienen umgebenden elektrischen Erde einen festgelegten Grenzwert unterschreitet. Als Umformer wird eine Vorrichtung zur Umwandlung der an einem Speiseanschluss anliegenden Spannung für zumindest einen Verbraucheranschluss verstanden, was beispielsweise sowohl Transformatoren als auch Umrichter inklusiv der jeweils zugehörigen Schaltgeräte und Schutzeinrichtungen umfasst. Ein Speiseanschluss kann beispielsweise als Pantograph ausgebildet sein. Zumindest ein elektrisch leitendes Rad kann beispielsweise als Stahlrad ausgebildet sein.

Das Speisungsnetz kann dabei eine Oberleitung oder aber auch eine Stromschiene sein.

Vorzugsweise kann eine zusätzliche Leitung zum temporären Anschließen an die Bahnschiene sowie eine damit verbundene Messeinrichtung zur Messung der Spannung der Umform-Station gegenüber der Bahnschienen vorgesehen sein.

Erfindungsgemäß können in der Steuereinheit mehrere unterschiedliche Grenzwerte abgespeichert sein und für den konkreten Einsatz kann zwischen den verschiedenen Grenzwerten umgeschaltet werden.

Vorteilhafterweise kann die mobile elektrische Umform-Station als Baumaschine, vorzugsweise als Schienenbagger oder als Schienenkran ausgebildet sein, und, bevorzugt an einer unveränderlichen Position, auf den Bahnschienen in an der Oberleitung angeschlossenem Zustand betreibbar ausgebildet sein. Der Betrieb kann vorteilhafterweise auch stationär erfolgen.

Dabei kann die Baumaschine als um eine Drehachse drehbare Baumaschine ausgebildet sein und der Speiseanschluss oder ein Speiseanschluss kann für den Abgriff von einer Oberleitung ausgebildet und zumindest in der Nähe der Drehachse, vorzugsweise mit der Drehachse fluchtend, vorgesehen sein.

Hierbei kann der in der Nähe der Drehachse, vorzugsweise mit der Drehachse fluchtend, vorgesehene Speiseanschluss kreisförmig ausgeführt sein. Seine Größe kann dabei derart ausgebildet sein, dass die leichte Schrägung des Fahrdrahts und die zur Drehachse nicht mittige Anbringung überdeckt wird.

Bevorzugt kann die mobile elektrische Umform-Station als Zugmaschine oder als Anhänger, der nicht angetrieben ist, ausgebildet sein.

Erfindungsgemäß kann der elektrische Umformer oder zumindest einer der elektrischen Umformer zur Wandelung von Gleichstrom in Wechselstrom und/oder zur Wandelung von Wechselstrom in Gleichstrom ausgebildet sein.

Auch kann zumindest ein Verbraucheranschluss als Niederspannungsanschluss ausgebildet sein. Dabei kann zumindest ein Niederspannungsanschluss als ein steckbarer Niederspannungsanschluss ausgebildet sein. Dieser hat den Vorteil, dass die Herstellung der Verbindung einfach und ohne technische Fachkenntnisse und Erfahrung möglich ist. Auch elektrische Laien können und dürfen somit an einem solchen Niederspannungsanschluss Geräte durch Einstecken eines elektrischen Anschlusses anschließen.

Weiterhin kann auch zumindest ein Verbraucheranschluss als Mittelspannungsanschluss ausgebildet sein.

Bei einem bevorzugten Ausführungsbeispiel der Erfindung kann ein Stromspeicher vorgesehen sein, der vorzugsweise zwischen dem elektrischen Umformer und dem Verbraucheranschluss oder zumindest einem der Verbraucheranschlüsse vorgesehen ist. Somit kann der Stromspeicher dabei zum Glätten von Leistungsspitzen des mindestens einen Verbrauchers dienen. Hierdurch kann die Belastung des Speisungsnetzes reduziert werden.

Vorzugsweise kann zumindest ein Verbraucheranschluss zur Einspeisung elektrischer Energie von einem externen Generator in den Stromspeicher und/oder in das Speisungsnetz ausgebildet sein.

Erfindungsgemäß kann die Steuereinheit derart ausgebildet sein, dass bei einem Anschluss der mobilen elektrischen Umform-Station an mehrere Speisungsnetze immer die Summe der einzelnen Leistungen der angeschlossenen Speisungsnetze ausgeleitet werden kann, und dass somit keines der Speisungsnetze überlastet wird.

Bevorzugt kann zumindest ein Verbraucheranschluss lösbar mit dem Rahmen verbunden sein, und dieser Verbraucheranschluss kann mit dem ihm zugeordneten elektrischen Umformer mittels eines flexiblen Kabels verbunden sein.

Zur Lösung der der Erfindung zugrunde liegenden Aufgabe kann eine erfindungsgemäße verfahrbare elektrische Umform-Station zum Betreiben zumindest einer mobilen Baumaschine verwendet werden.

Alternativ kann eine erfindungsgemäße verfahrbare elektrische Umform-Station zum Aufladen zumindest eines Stromspeichers, vorzugsweise zumindest eines Stromspeichers einer mobilen Baumaschine verwendet werden. Somit ist auch die Versorgung mit elektrischer Energie bei solchen Baumaschinen möglich, bei denen eine Direkteinspeisung aus verschiedenen Gründen nicht möglich ist. Dies kann beispielsweise darin begründet sein, dass der Einsatzort entweder etwas weiter von den Bahnschienen entfernt ist, an einem Abschnitt ohne Zugang zu externer angeschlossener elektrischer Versorgung liegt oder aber während des Einsatzes nicht unveränderlich ist.

## Patentansprüche

1. Verfahrbare elektrische Umform-Station zur Verwendung auf Bahnschienen, mit einem Rahmen, umfassend zumindest vier elektrisch leitende Räder, vorzugsweise Stahlräder, zum Fahren auf Bahnschienen und wenigstens einen Speiseanschluss sowie zumindest einen Verbraucheranschluss, wobei jeder Speiseanschluss zum Anschluss an ein Speisungsnetz ausgebildet ist und der durch den Speiseanschluss geleitete Strom über wenigstens ein elektrisch leitendes Rad zunächst an die Bahnschienen und von dort an die die Bahnschienen umgebende elektrische Erde weitergeleitet wird, wobei weiterhin jeder Verbraucheranschluss zur Verbindung mit wenigstens einem externen elektrischen Verbraucher und/oder zumindest einem externen Generatoren ausgebildet ist, und weiterhin wenigstens einen elektrischen Umformer, wobei jeder elektrische Umformer zur Umwandlung der am Speiseanschluss anliegenden Spannung für zumindest einen Verbraucheranschluss ausgebildet und mit zumindest einem Speiseanschluss und wenigstens einem Verbraucheranschluss mittel- oder unmittelbar jeweils verbunden ist, **dadurch gekennzeichnet, dass**
- zumindest eine Messeinrichtung vorgesehen ist, die zur Erfassung der Schienenspannung der mit den elektrisch leitenden Rädern verbundenen Bahnschienen ausgebildet ist, und dass zumindest eine mit der Messeinrichtung verbundene Steuereinheit vorgesehen ist, wobei die Steuereinheit zur Auslösung einer den Stromfluss zwischen allen Speiseanschlüssen und allen elektrisch leitenden Rädern, durch welche Strom an die Bahnschienen geleitet wird, trennenden Sicherung ausgebildet ist, wenn die von der Messeinrichtung gemessene Schienenspannung der mit den elektrisch leitenden Rädern verbundenen Bahnschienen einen in der Steuereinheit abgespeicherten Grenzwert überschreitet
und/oder
- zumindest eine Messeinrichtung vorgesehen ist, die zur Erfassung von Spannungsunterschieden zwischen mit den elektrisch leitenden Rädern verbundenen Bahnschienen einerseits und der die Bahnschienen umgebende elektrischen Erde andererseits ausgebildet ist, und dass zumindest eine mit der Messeinrichtung verbundene Steuereinheit sowie eine Sicherung zur Trennung des Stromflusses zwischen allen Speiseanschlüssen und allen elektrisch leitenden Rädern, durch welche Strom an die Bahnschienen geleitet wird, vorgesehen sind, wobei die Steuereinheit zur Auslösung der Sicherung ausgebildet ist, wenn der von der Messeinrichtung gemessene Spannungsunterschied zwischen den mit den elektrisch leitenden Rädern verbundenen Bahnschienen einerseits und der die Bahnschienen umgebende elektrischen Erde andererseits einen in der Steuereinheit abgespeicherten Grenzwert unterschreitet, wobei der Grenzwert vorzugsweise 50 V beträgt.

2. Verfahrbare elektrische Umform-Station nach dem vorhergehenden Anspruch, **dadurch gekennzeichnet, dass** eine zusätzliche Leitung zum temporären Anschließen an die Bahnschiene sowie eine damit verbundene Messeinrichtung zur Messung der Spannung der Umform-Station gegenüber der Bahnschienen vorgesehen sind.

3. Verfahrbare elektrische Umform-Station nach einem der vorhergehenden Ansprüche, **dadurch gekennzeichnet, dass** in der Steuereinheit mehrere unterschiedliche Grenzwerte abgespeichert sind und für den konkreten Einsatz zwischen den verschiedenen Grenzwerten umgeschaltet werden kann.

4. Verfahrbare elektrische Umform-Station nach einem der vorhergehenden Ansprüche, **dadurch gekennzeichnet, dass** die mobile elektrische Umform-Station als Baumaschine, vorzugsweise als Schienenbagger oder als Schienenkran ausgebildet ist, und, bevorzugt an einer unveränderlichen Position, auf den Bahnschienen in an der Oberleitung angeschlossenem Zustand betreibbar ausgebildet ist.

5. Verfahrbare elektrische Umform-Station nach dem vorhergehenden Anspruch, **dadurch gekennzeichnet, dass** die Baumaschine als um eine Drehachse drehbare Baumaschine ausgebildet ist und der Speiseanschluss oder ein Speiseanschluss für den Abgriff von einer Oberleitung ausgebildet und zumindest in der Nähe der Drehachse, vorzugsweise mit der Drehachse fluchtend, vorgesehen ist.

6. Verfahrbare elektrische Umform-Station nach dem vorhergehenden Anspruch, **dadurch gekennzeichnet, dass** der in der Nähe der Drehachse, vorzugsweise mit der Drehachse fluchtend, vorgesehene Speiseanschluss kreisförmig ausgeführt ist.

7. Verfahrbare elektrische Umform-Station nach einem der vorhergehenden Ansprüche, **dadurch gekennzeichnet, dass** die mobile elektrische Umform-Station als Zugmaschine oder als Anhänger ausgebildet ist.

8. Verfahrbare elektrische Umform-Station nach einem der vorhergehenden Ansprüche, **dadurch gekennzeichnet, dass** der elektrische Umformer oder zumindest einer der elektrischen Umformer zur Wandelung von Gleichstrom in Wechselstrom und/oder zur Wandelung von Wechselstrom in Gleichstrom ausgebildet ist.

9. Verfahrbare elektrische Umform-Station nach einem der vorhergehenden Ansprüche, **dadurch gekennzeichnet, dass** zumindest ein Verbraucheranschluss als Niederspannungsanschluss ausgebildet ist.

10. Verfahrbare elektrische Umform-Station nach dem vorhergehenden Anspruch, **dadurch gekennzeichnet, dass** zumindest ein Niederspannungsanschluss als ein steckbarer Niederspannungsanschluss ausgebildet ist.

11. Verfahrbare elektrische Umform-Station nach einem der vorhergehenden Ansprüche, **dadurch gekennzeichnet, dass** zumindest ein Verbraucheranschluss als Mittelspannungsanschluss ausgebildet ist.

12. Verfahrbare elektrische Umform-Station nach einem der vorhergehenden Ansprüche, **dadurch gekennzeichnet, dass** ein Stromspeicher vorgesehen ist, der vorzugsweise zwischen dem elektrischen Umformer und dem Verbraucheranschluss oder zumindest einem der Verbraucheranschlüsse vorgesehen ist.

13. Verfahrbare elektrische Umform-Station nach dem vorhergehenden Anspruch, **dadurch gekennzeichnet, dass** zumindest ein Verbraucheranschluss zur Einspeisung elektrischer Energie von einem externen Generator in den Stromspeicher und/oder in das Speisungsnetz ausgebildet ist.

14. Verfahrbare elektrische Umform-Station nach einem der vorhergehenden Ansprüche, **dadurch gekennzeichnet, dass** die Steuereinheit derart ausgebildet ist, dass bei einem Anschluss der mobilen elektrischen Umform-Station an mehrere Speisungsnetze immer die Summe der einzelnen Leistungen der angeschlossenen Speisungsnetze ausgeleitet werden kann, und dass keines der Speisungsnetze überlastet wird.

15. Verfahrbare elektrische Umform-Station nach einem der vorhergehenden Ansprüche, **dadurch gekennzeichnet, dass** zumindest ein Verbraucheranschluss lösbar mit dem Rahmen verbunden und dieser Verbraucheranschluss mit dem ihm zugeordneten elektrischen Umformer mittels eines flexiblen Kabels verbunden ist.

16. Verwendung der verfahrbaren elektrischen Umform-Station nach einem der vorhergehenden Ansprüche zum Betreiben zumindest einer mobilen Baumaschine.

17. Verwendung der verfahrbaren elektrischen Umform-Station nach einem der vorhergehenden Ansprüche zum Aufladen zumindest eines Stromspeichers, vorzugsweise zumindest eines Stromspeichers einer mobilen Baumaschine.
